# EUROPÄISCHE PATENTSCHRIFT

(11) **EP 1 675 745 B1**
(45) Veröffentlichungstag und Bekanntmachung des Hinweises auf die Patenterteilung: **09.01.2008**
(21) Anmeldenummer: 04786940.9
(22) Anmeldetag: 13.09.2004
(51) Int. Cl.: B60N 2/36

(54) **SITZ MIT SCHWENKBAREM SITZPOLSTERTEIL**
SEAT COMPRISING A PIVOTABLE SEAT CUSHION PART
SIEGE COMPORTANT UNE PARTIE REMBOURRAGE PIVOTANTE

(30) Priorität: 13.10.2003 DE 10348085
(43) Veröffentlichungstag der Anmeldung: 05.07.2006
(73) Patentinhaber: Johnson Controls GmbH, 51399 Burscheid (DE)
(72) Erfinder: TABELLION, Joerg, 51467 Bergisch Gladbach (DE); ABRAHAM, James, 51399 Burscheid (DE)
(74) Vertreter: Wolff, Felix
(86) Internationale Anmeldenummer: PCT/EP2004/010228
(87) Internationale Veröffentlichungsnummer: WO 2005/037600

(56) Entgegenhaltungen:
- EP-A- 1 304 256
- WO-A1-01/38131
- WO-A1-03/002372
- DE-C1- 19 943 891

## Beschreibung

Die Erfindung betrifft einen Sitz, Insbesondere Fahrzeugsitz, mit einem Sitzunterbautell, mit einem Sitzpolsterteil und mit einem Lehnentell, wobei das Lehnenteil schwenkbar ist und der ganze Sitz in eine Ladeposition dergestalt einstellbar ist, dass ein größeres Laderaumvolumen eines Fahrzeugs ermöglicht wird, wobei das Sitzpolstertell geschwenkt bzw. gedreht wird.

Beispielsweise aus der Druckschrift WO01/38131 ist ein Fahrzeugsitz bekannt, bei dem ein mittels eines Rahmens gehaltenes Polsterkissen für eine Sitzfläche des Fahrzeugsitzes derart (linear) verschieblich angeordnet ist, dass das Polsterkissen und der Rahmen mittels einer im wesentlichen trenslatorischen Bewegung unter eine Laderaumbodenabdeckung bewegt werden kann, so dass ein größeres verfügbares Laderaumvolumen möglich ist. Nachteilig ist hierbei, dass nicht die Rückseite der Polsterung der Sitzfläche als Kofferraumboden verwendbar ist, so dass der bekannte Fahrzeugsitz hierdurch schwerer, teurer und aufwendiger wird.

Weiterhin ist aus der Druckschrift EP 1304 256 und der DE 19943891 ein neigbarer Rücksitz für ein Fahrzeug bekannt, bei dem ein vergleichsweise aufwändiger Mechanismus dafür sorgt, dass sowohl die Rückeniehne bzw. ein Lehnenteil des Fahrzeugsitzes als auch ein Sitztell des Fahrzeugsitzes gegenüber einer Verankerung des Sitzes Im Fahrzeug derart verschwenkbar ist, dass die Rückseiten sowohl des Lehnenteils als auch des Sitzteils im wesentlichen bündig mit einem Laderaumboden abschließen, so dass bei in umgeklappter Position befindlichem Fahrzeugsitz eine Erhöhung des Laderaumvolumens möglich ist. Hierbei ist es nachteilig, dass eine komplizierte Verstell- bzw. Bewegungsmechnik für die Verstellung des Fahrzeugsitzes aus einer Gebrauchsposition in eine Ladeposition oder umgekehrt erforderlich ist. Eine solche komplizierte Mechanik hat mehrere nachteilige Wirkungen, beispielsweise, dass eine solche Mechanik teuer ist weiterhin dass eine solche Mechanik vergleichsweise wenig stabil ist, dass weiterhin eine solche Mechanik schwerer ist als eine einfache Mechanik und schließlich dass eine solche komplizierte Mechanik schwieriger in einem Fahrzeug zu montieren ist, was wiederum die Kosten für die Montage des Fahrzeugsitzes im Fahrzeug erhöht,

Bei dem bekannten Fahrzeugsitz ist es weiterhin nachteilig, dass in der Ladeposition des Fahrzeugsitzes Teile des Fahrzeugsitzes nicht weit genug nach hinten im Fahrzeug positioniert sind. Daher kann es bei den bekannten Fahrzeugsitzen zu nachteiligen und Behinderungen beim Umklappen des Fahrzeugsitzes bzw. beim Beladen des Fahrzeuges bzw. beim Beladen seines Ladevolumens kommen.

Der Erfindung liegt daher die Aufgabe zugrunde, einen Sitz, insbesondere einen Fahrzeugsitz zu schaffen, bei dem die Nachteile des Standes der Technik vermieden werden und der darüber hinaus einfach und stabil aufgebaut ist, kostengünstig produzierbar ist, leicht und kostengünstig montierbar ist und darüber hinaus eine große Lebensdauer und große Zuverlässigkeit über die gesamte Lebensdauer des Sitzes aufweist.

Diese Aufgabe wird erfindungsgemäß durch einen Sitz, insbesondere einen Fahrzeugsitz, gelöst, bei dem der Sitz ein Sitzunterbauteil, ein Sitzpolsterteil und ein Lehnenteil aufweist, wobei das Lehnenteil mit dem Sitzpolsterteil um eine erste Achse drehbar verbunden ist, wobei der Sitz in eine Gebrauchsposition und in eine Ladeposition einstellbar ist, wobei zwischen der Gebrauchsposition und der Ladeposition des Sitzes eine Bewegung des Sitzpolsterteils vorgesehen ist, die eine Drehung des Sitzpolsterteils um etwa 180° um eine zu ersten Achse parallele zweite Achse umfasst, wobei weiterhin die Bewegung durch einen am Sitzunterbauteil gegenüber einer Fahrtrichtung weiter vorne befestigten ersten Hebel und einen am Sitzunterbauteil gegenüber der Fahrtrichtung weiter hinten befestigten zweiten Hebel definiert ist, wobei der erste Hebel sowohl in der Gebrauchsposition als auch in der Ladeposition im wesentlichen gleich positioniert ist. Hierdurch ist es erfindungsgemäß möglich einen besonders einfachen, robusten, kostengünstig herstellbaren und kostengünstig montierbaren Fahrzeugsitz bzw. Mechanismus für einen Fahrzeugsitz zu schaffen, so dass ein mit einem solchen Sitz ausgestattetes Fahrzeug ebenfalls die vorteilhaften Eigenschaften aufweist.

Bevorzugt ist es weiterhin vorgesehen, dass das Sitzpolsterteil in der Gebrauchsposition des Sitzes einerseits in der Ladeposition des Sitzes anderseits zwei sich im wesentlichen nicht überschneidende Raumbereiche einnimmt, bzw. es wird die Aufgabe ebenfalls durch einen Fahrzeugsitz gelöst, der ein Sitzunterbauteil, ein Sitzpolsterteil und ein Lehnenteil aufweist, wobei das Lehnenteil mit dem Sitzpolsterteil um eine erste Achse drehbar verbunden ist, wobei der Sitz in eine Gebrauchsposition und in eine Ladeposition einstellbar ist, wobei zwischen der Gebrauchsposition und der Ladeposition des Sitzes eine Bewegung des Sitzpolsterteils vorgesehen ist, die eine Drehung des Sitzpolsterteils um etwa 180° um eine zur ersten Achse parallele zweite Achse umfasst, wobei weiterhin das Sitzpolsterteil in der Gebrauchsposition des Sitzes einerseits und in der Ladeposition des Sitzes andererseits zwei sich im wesentlichen nicht überschneidende Raumbereiche einnimmt. Hierdurch ist es in besonderer Weise möglich, den Sitz bzw. Teile des Sitzes in seiner Ladeposition derart anzuordnen, dass keine Beeinträchtigung beim Umklappen bzw. bei der Einstellung der Ladeposition mit vor dem Sitz angeordneten weiteren Sitzen erfolgt. Insofern trägt ein solcher erfindungsgemäßer Fahrzeugsitz dazu bei, dass die Entwicklung bzw. das Design von in verschiedenen Reihen bzw. an verschiedenen Positionen im Fahrzeug zu montierende Sitze weitgehend unabhängig voneinander durchgeführt werden kann, so dass die Komplexität der Fahrzeugsitzentwicklung reduziert und damit ihre Kosten verringert werden kann.

Vorteilhaft ist es weiterhin vorgesehen, dass die erste Achse in der Gebrauchsposition des Sitzes und in der Ladeposition des Sitzes im wesentlichen am gleichen Ort vorgesehen ist, wobei vorzugsweise die erste Achse im wesentlichen senkrecht zu einer Fahrtrichtung vorgesehen ist, wobei die erste Achse im wesentlichen senkrecht zur Fahrtrichtung vorgesehen ist. Hierdurch wird es möglich, eine besonders stabile Anbindung zwischen dem Fahrzeug und den verschiedenen Bestandteilen des erfindungsgemäßen Fahrzeugsitzes vorzusehen. Insbesondere ist dadurch erfindungsgemäß möglich, dass der am Sitzunterbauteil weiter vorne befestigte erste Hebel lediglich eine Schwenkbewegung beim Umklappen des Sitzes durchführt, ansonsten jedoch sowohl in der Gebrauchsposition als auch in der Ladeposition des Sitzes im wesentlichen eine identische Position einnimmt. Dies erhöht die Stabilität und die Einfachheit der Anbindung zwischen dem Sitzpolsterteil und dem Sitzunterbauteil bzw. allgemein zwischen dem Sitz und dem Fahrzeug.

Weiterhin ist es bevorzugt, dass die Hebel Teil eines das Sitzunterbauteil und das Sitzpolsterteil verbindenden Bewegungsmechanismus sind. Hierdurch ist es erfindungsgemäß in vorteilhafter Weise möglich, dass eine besonders einfache und leichte Benutzung der Umklappmöglichkeiten des Sitzes dadurch möglich wird, dass die Bewegung des Sitzes beim Umklappen relativ stark vorgegeben ist und dadurch Fehlpositionen beim Umklappen des Sitzes und Fehlbedienungen weitgehend vermieden werden.

Weiterhin ist es erfindungsgemäß bevorzugt, wenn der zweite Hebel in der Ladeposition des Sitzes gegenüber der Gebrauchsposition des Sitzes um einen vorgegebenen Winkel verschwenkt ist. Hierdurch kann die Anbindung des Sitzpolsterteils an den Sitzunterbauteil in besonderem Maße einfach und robust ausgeführt sein. Weiterhin ist es dadurch erfindungsgemäß möglich, dass eine besonders stabile Umklappung, die auch robust gegenüber einer Fehlbedienung, beispielsweise durch Kinder oder dergleichen ist, erhöht wird.

Weiterhin ist es bevorzugt, dass das Lehnenteil in der Ladeposition des Sitzes im wesentlichen in einer Ebene mit dem Sitzpolsterteil angeordnet ist. Bevorzugt ist weiterhin, dass sich das Lehnenteil in der Ladeposition des Sitzes an das Sitzpolsterteil anschließt. Hierdurch ist es möglich, dass der Fahrzeugsitz in seiner Ladeposition sehr flach bzw. sehr tief angeordnet ist, so dass kaum eine Beeinträchtigung des von den Fahrzeugabmessungen theoretisch möglichen Laderaumvolumens gegeben ist.

Weiterhin ist es bevorzugt, dass in der Ladeposition des Sitzes die Rückseite des Lehnenteils und die Rückseite des Sitzpolsterteils mit einer Laderaumebene zusammenfallen. In diesem Fall kann auch der Bereich, der von dem umgeklappten Fahrzeugsitz (in seiner Gebrauchsposition) eingenommen wird, als ebenerdiger bzw. sich an die Laderaumebene anschließender Laderaumbereich genutzt werden. Besonders vorteilhaft ist hierbei weiterhin, dass keine zusätzlichen Laderaumabdeckungen oder dergleichen erforderlich sind, um beispielsweise einen Schutz der Polsterungen bzw. der Gebrauchsseiten des Sitzes herbeizuführen, weil die Gebrauchsseiten des Sitzes nach unten weisen und daher deren Beeinträchtigung durch die Benutzung des Sitzes (der Rückseite des Sitzes) als der Teil der Laderaumfläche ausgeschlossen ist bzw, weitgehend ausgeschlossen ist.

Die Erfindung wird nachfolgend anhand von in der Zeichnung dargestellten Ausführungsbeispielen naher erläutert.
- **Figur 1**: zeigt einen erfindungsgemäßen Sitz in seiner Gebrauchsposition.
- **Figuren 2, 3 und 4**: zeigen den erfindungsgemäßen Sitz in Zwischenstellungen bzw. Zwischenpositionen.
- **Figur 5**: zeigt den erfindungsgemäßen Sitz in seiner Ladeposition zusammen mit einem weiteren Sitz einer vor dem erfindungsgemäßen Sitz angeordneten Sitzreihe.

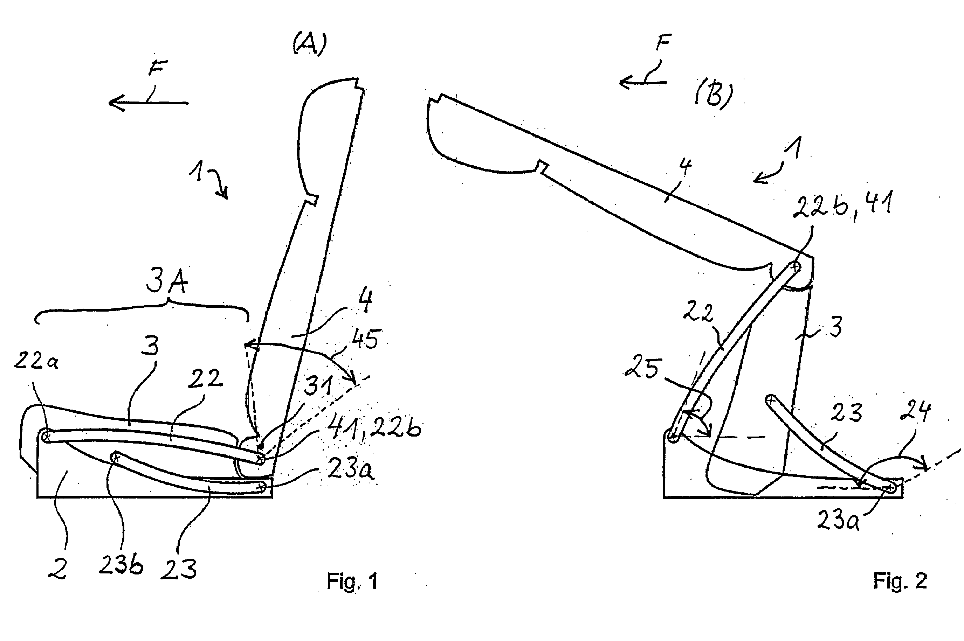

In **Figur 1** ist ein erfindungsgemäßer Sitz 1, insbesondere ein Fahrzeugsitz, In seiner Gebrauchsposition A dargestellt. Der Sitz 1 welst ein Sitzunterbauteil 2, ein Sitzpolsterteil 3 und ein Lehnenteil 4 auf. Das Sitzunterbauteil 2 ist erfindungsgemäß mit einem nicht dargestellten Fahrzeug verbunden. Diese Verbindung des Sitzes 1 mit dem Fahrzeug über das Sitzunterbauteil 2 ist im allgemeinen derart vorgesmen, dass der Sitz 1 insgesamt relativ zum nicht dargestellten Fahrzeug insbesondere translatorich bewegbar ist. Weiterhin kann der erfindungsgemäße Sitz 1, d. h. insbesondere sein Sitzunterbauteil 2 gegenüber dem Fahrzeug auch noch höhenvestellbar und/oder In anderer Hinsicht verstellbar vorgesehen sein.

Beim Sitz 1 ist vorzugweise das Lehnenteil 4 um eine erste Achse 41 drehbar mit dem Sitzpolster 3 verbunden. Erfindungsgemäß ist es sowohl denkbar, dass das Lehnentell 4 um die erste Achse 41 in der Gebrauchsposition A des Sitzes 1 lediglich in einer einzigen Winkelstellung einstellbar ist, als auch dass, das Lehnentell 4 in der Gebrauchsposition A in einem mehr oder weniger großen Winkelbereich 45 einstellbar bzw. verschwenkbar ist, um den unterschiedlichen Benutzungswünschen unterschiedlicher Benutzer des Sitzes 1 bzw. auch eines einzigen Benutzers in unterschiedlichen Benutzungssituationen, beispielsweise insbesondere unterschiedlichen Ladesituationen des Fahrzeugs gerecht werden zu können. Die erste Achse 41 verläuft hierbei im wesentlichen senkrecht zur Zeichenebene und damit auch senkrecht zu einer üblicherweise vorgesehenen Fahrtrichtung F, die in **Figur 1** mittels eines Pfeils angegeben ist. Die Fahrtrichtung F ist hierbei relativ zu dem Sitz 1 in einer üblichen Weise dargestellt, nämlich dergestalt, dass ein auf dem Sitz 1 in üblicher Weise sitzender, nicht dargestellter Benutzer des Sitzes 1 normalerweise in Fahrtrichtung F blickt. Selbstverständlich ist es erfindungsgemäß auch vorgesehen, dass der erfindungsgemäße Sitz 1 beispielsweise entgegen der Hauptfortbewegungsrichtung des Fahrzeugs angeordnet ist, so dass ein Benutzer des Sitzes 1 üblicherweise entgegen der Hauptfortbewegungsrichtung des Fahrzeugs blickt. In diesem Fall ist selbstverständlich die Fahrtrichtung F entsprechend umzudeuten.

Erfindungsgemäß ist ein Bewegungsmechanismus vorgesehen, um den Sitzunterbauteil 2 derart mit dem Sitzpolsterteil 3 bzw. dem Lehnenteil 4 zu verbinden, dass der Sitz 1 ausgehend von seiner Gebrauchsposition A in eine später zu beschreibende Ladeposition umgeklappt bzw. bewegt werden kann. Hierbei umfasst der Bewegungsmechanismus in einer erfindungsgemäß besonders einfachen und robusten Ausführungsform insbesondere einen ersten Hebel 22 und einen zweiten Hebel 23. Der erste Hebel 22 ist dabei an einer ersten Stelle 22a mit dem Sitzunterbauteil 2 beweglich, insbesondere schwenkbar, verbunden und es ist der erste Hebel 22 weiterhin mit dem Sitzpolsterteil 3 bzw. dem Lehnenteil 4 an einer weiteren Stelle 22b verbunden, die erfindungsgemäß insbesondere etwa mit der ersten Achse 41 zusammenfällt bzw. in deren räumlicher Nähe liegt. Ein zweiter Hebel 23 ist an einer zweiten Stelle 23a mit dem Sitzunterbauteil 2 verbunden und ist an einer weiteren Stelle 23b mit dem Sitzpolsterteil 3 verbunden. Beide Hebel 22, 23 sind an der ersten Stelle 22a , 23a und den weiteren Stelle 22b, 23b jeweils drehbar mit dem Sitzunterbauteil 2 bzw. Sitzpolsterteil 3 oder auch der Verbindungsstelle des Sitzpolsterteils 3 mit dem Lehnenteil 4 verbunden.

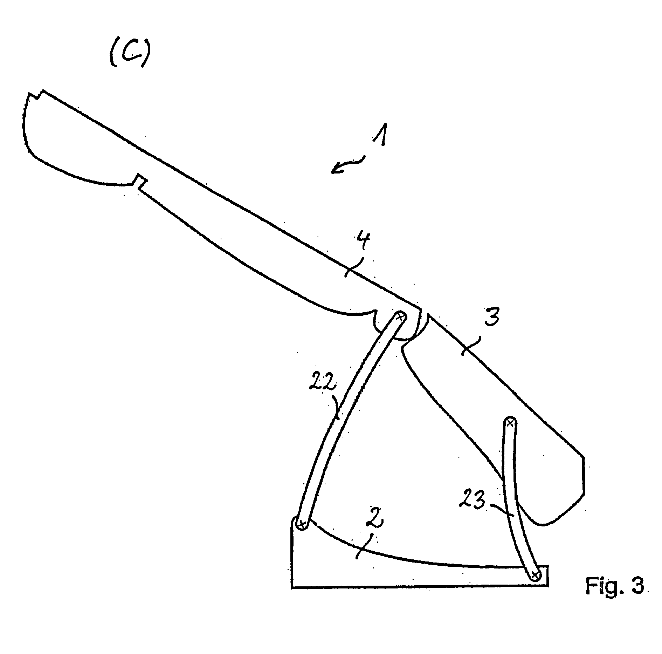

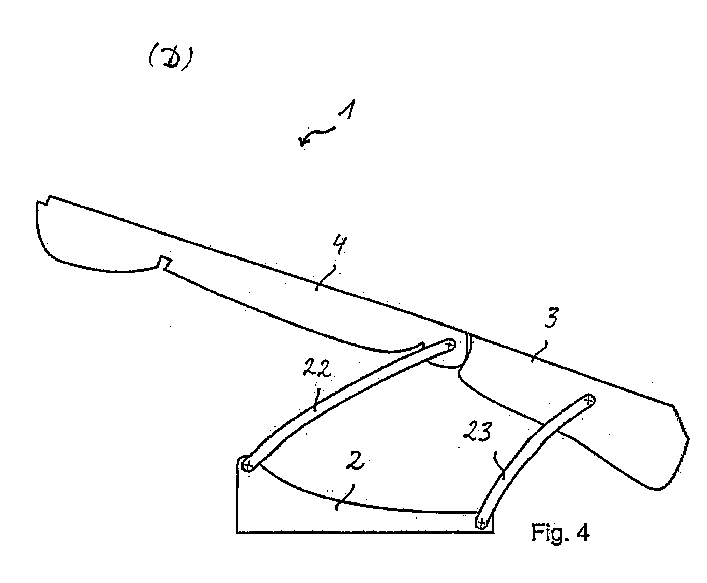

Die **Figuren 2, 3 und 4** stellen weitere Positionen B, C, D des Sitzes 1 dar, wobei jeweils sowohl das Sitzunterbauteil 2, das Sitzpolsterteil 3, das Lehnenteil 4, der erste Hebel 22 und der zweite Hebel 23 unterschiedliche Positionen relativ zueinander einnehmen. Ausgehend von der in Figur 1 dargestellten Gebrauchsposition A gehen die in den Figuren 2, 3 und 4 dargestellten jeweilige Positionen B, C, D jeweils zunehmend in eine nachfolgend zu beschreibende Ladeposition über.

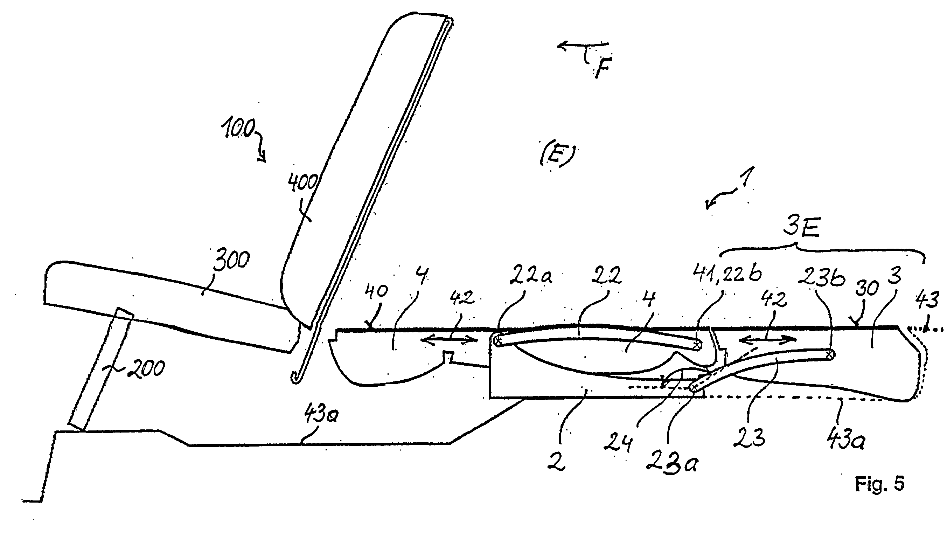

In **Figur 5** ist die Ladeposition E des Sitzes 1 dargestellt, sowie weiterhin andeutungsweise ein weiterer Sitz 100 einer Sitzreihe des Fahrzeugs, die sich vor dem erfindungsgemäßen Sitz 1 bzw. vor einer mit mehreren erfindungsgemäßen Sitzen 1 bestückten Sitzreihe des Fahrzeugs befindet.

Genauso wie der Sitz 1 umfasst der weitere Sitz 100 beispielhaft ein weiteres Sitzpoisterteit 300, ein weiteres Lehnenteil 400 und gegebenenfalls ein weiteres Sitzunterbauteil 200. Auch der weitere Sitz 100 ist an dem nicht dargestellten Fahrzeug beispielhaft in Fahrtrichtung F vor dem erfindungsgemäßen Sitz 1 angeordnet bzw. befestigt. Wiederum umfasst der Sitz 1 das Sitzunterbauteil 2, das Sitzpolsterteil 3, das Lehnenteil 4 sowie die das Sitzunterbauteil 2 mit den restlichen Teilen des Sitzes 1 verbindenden Hebel 22 und 23. In der Ladeposition E des Sitzes 1 ist das Lehnenteil 4 vorzugsweise im wesentlichen in einer Ebene 42 mit dem Sitzpolsterteil 3 angeordnet. Das bedeutet, dass das Sitzpolsterteil 3 und das Lehnenteil 4 des Sitzes 1 in der Ladeposition E bevorzugt "ausgestreckt" angeordnet sind. Hierbei bildet die mit dem Bezugszeichen 40 bezeichnete Rückseite des Lehnenteils 4 und die mit dem Bezugszeichen 30 bezeichnete Rückseite des Sitzpolsterteils 3 bevorzugt eine gemeinsame Ebene mit einer mit dem Bezugszeichen 43 bezeichneten Laderaumebene eines Laderaums des Fahrzeugs bzw. eines Laderaumbodens des Fahrzeugs, der sich an den mit dem Bezugszeichen 43a bezeichneten Fahrzeugboden anschließt.

Die Funktionsweise des erfindungsgemäßen Sitzes bzw. der Bewegungen des Lehnenteils 4 und des Sitzpolsterteils 3 relativ zum Sitzunterbauteil 2 des Sitzes 1, die durch den insbesondere aus dem ersten Hebel 22 und dem zweiten Hebel 23 bestehenden Bewegungsmechanismus definiert ist, geht aus der Abfolge der **Figuren 1, 2, 3, 4 und 5** hervor, insbesondere aus den Zwischenpositionen B, C, D des Sitzes 1. In **Figur 2** ist beispielsweise ersichtlich, dass der erste Hebel 22 im Verlauf der Umklappbewegung zwischen der Gebrauchsposition A und-der Ladeposition E lediglich um einen mit dem Bezugszeichen 25 bezeichneten Drehbetrag nach oben bewegt, um es dem Sitzpolsterteil 3 zu erlauben, sich unterhalb der weiteren Stelle 22b, die erfindungsgemäß vorteilhafterweise insbesondere mit der ersten Achse 41 zusammenfällt, entgegen der Fahrtrichtung F hindurch zu bewegen, um sich über die Zwischenstadien der weiteren Zwischenpositionen C, D an die Laderaumebene 43 (vergleiche **Figur 5)** anzuschließen. Bei dieser Bewegung vollzieht der zweite Hebel 23 eine Drehbewegung um die zweite Stelle 23a (an der er mit dem Sitzunterbauteil 2 drehbar befestigt ist) um einen vorgegebenen Winkel 24 zwischen seinen (Dreh-)Positionen in der Gebrauchsposition A des Sitzes 1 und der Ladeposition E des Sitzes 1. Der vorgegebene Winkel 24 ist dabei sowohl in **Figur 2** eingezeichnet als auch in **Figur 5.** Aus den **Figuren 1 und 5** wird weiterhin sichtbar, dass zum einen ein mittels des Bezugszeichens 3A bezeichneter Raumbereich, den das Sitzpolsterteil 3 in der Gebrauchsposition A einnimmt, und dass zum anderen ein mittels des Bezugszeichens 3E bezeichneter Raumbereich, der den vom Sitzpolsterteil 3 eingenommenen Raumbereich in der Ladeposition E des Sitzes 1 bezeichnet, vollständig unterschiedlich sind. Erfindungsgemäß ist es also vorgesehen, dass sich ausgehend von der Gebrauchsposition A das Sitzpolsterteil 3 bevorzugt vollständig hinaus bewegt und einen vom ersten Raumbereich 3A komplett disjunkten zweiten Raumbereich 3E einnimmt. Das Sitzpoisterteil 3 wird bei dieser Bewegung (auch) um ca. 180° gedreht. Ausgehend von den Endpositionen des Sitzpolsterteils 3 kann abstrakt eine Drehachse dieser Drehbewegung bestimmt werden, wobei klar ist, dass die Drehbewegung nicht im Wortsinn "um diese Drehachse" erfolgt. Diese Drehachse entspricht der zweiten Achse 31, die sich erfindungsgemäß in der Nähe der ersten Achse 41 befinden kann bzw. auch mit dieser zusammenfallen kann, jedenfalls aber zu dieser im wesentlichen parallel verläuft. Die Tatsache, dass die Raumbereiche 3A, 3E disjunkt sind, kann auch dadurch ausgedrückt werden, dass die zweite Achse 31 im wesentlichen nicht im Sitzpolsterteil 3 verläuft.

Durch den erfindungsgemäßen Bewegungsmechanismus ist das Sitzpolsterteil 3 in seiner Ladeposition E sehr weit nach hinten, d.h. entgegen der Fahrtrichtung F verschoben angeordnet, so dass keinerlei Behinderungen dieser Bewegung durch einen ggf. vorhandenen weiteren Sitz 100 bestehen.

Weiterhin ist es erfindungsgemäß vorteilhaft, dass die erste Stelle 22a weiter vorne, d. h. in Fahrtrichtung F weiter vorne am Sitzunterbauteil 2 vorgesehen ist, und dass die zweite Stelle 23a in Fahrtrichtung F weiter hinten am Sitzunterbauteil 2 vorgesehen ist. Hierdurch ist es möglich, dass der Bewegungsmechanismus zur Umklappung des Sitzes 1 in besonderer einfacher und robuster Weise hergestellt werden kann.

Es ist klar, dass die Hebel 22, 23 bevorzugt beidseitig am Sitzunterbauteil bzw. am Sitzpolsterteil 2 vorgesehen sind, so dass dem Bewegungsmechanismus eine größere Stabilität verliehen werden kann. Der vorgegebene Winkel 24 ist erfindungsgemäß bevorzugt zwischen 70° und 180° vorgesehen, bevorzugt zwischen 100° und 150°.

### Bezugszeichenliste

- 1: Sitz
- 2: Sitzunterbauteil
- 3: Sitzpolsterteil
- 3A, 3E: Raumbereich
- 4: Lehnenteil
- 22: erster Hebel
- 22a: erste Stelle
- 23: zweiter Hebel
- 23a: zweite Stelle
- 22b, 23b: weitere Stellen
- 24: vorgegebener Winkel
- 25: Drehbetrag
- 30: Rückseite des Sitzpolsterteils
- 31: zweite Achse
- 40: Rückseite des Lehnenteils
- 41: erste Achse
- 42: Ebene
- 43: Laderaumebene eines Laderaums
- 43a: Fahrzeugboden
- 45: Winkelbereich
- 100: weiterer Sitz
- 200: weiteres Sitzunterbauteil
- 300: weiteres Sitzpolsterteil
- 400: weiteres Lehnenteil
- A: Gebrauchsposition
- B, C, D: weitere Positionen des Sitzes/Zwischenpositionen
- E: Ladeposition
- F: Fahrtrichtung

## Patentansprüche

1. Sitz (1), insbesondere Fahrzeugsitz, mit einem Sitzunterbauteil (2), mit einem Sitzpolsterteil (3) und mit einem Lehnenteil (4), wobei das Lehnenteil (4) mit dem Sitzposterteil (3) um eine erste Achse (41) drehbar verbunden ist, wobei der Sitz (1) in eine Gebrauchsposition (A) und in eine Ladeposition (E) einstellbar ist, wobei zwischen der Gebrauchsposition (A) und der Ladeposition (E) des Sitzes (1) eine Bewegung des Sitzpolsterteils (3) vorgesehen ist, die eine Drehung des Sitzpolsterteils (3) um etwa 180° um eine zur ersten Achse (41) parallellen zweiten Achse (31) umfasst, wobei die Bewegung definiert ist, durch einen am Sitzunterbauteil (2) gegenüber einer Fahrtrichtung (F) weiter vorne (22a) befestigten ersten Hebel (22), der sowohl in der Gebrauchsposition (A) als auch in der Ladeposition (E) im wesentlichen gleich positioniert ist, und **dadurch gekennzeichnet, dass** die Bewegung zusätzlich durch einen am Sitzunterbauteil (2) gegenüber der Fahrtrichtung (F) weiter hinten (23a) befestigten zweiten Hebel (23) definiert ist.

2. Sitz (1), insbesondere Fahrzeugsitz, nach Anspruch 1, **dadurch gekennzeichnet, dass** das Sitzpolsterteil (3) in der Gebrauchsposition (A) des Sitzes (1) einerseits und in der Ladeposition (E) des Sitzes (1) andererseits zwei sich im wesentlichen nicht überschneidende Raumbereiche (3A, 3E) einnimmt.

3. Sitz (1) nach einem der vorhergehenden Ansprüche, **dadurch gekennzeichnet, dass**, die erste Achse (41) in der Gebrauchsposition (A) des Sitzes (1) und in der Ladeposition (E) des Sitzes (1) im wesentlichen am gleichen Ort vorgesehen ist, wobei vorzugsweise die erste Achse (41) im wesentlichen senkrecht zu der Fahrtrichtung (F) vorgesehen ist.

4. Sitz (1) nach einem der vorhergehenden Ansprüche, **dadurch gekennzeichnet, dass**, die Hebel (22, 23) Teil eines das Sitzunterbauteil (2) und/oder das Lehnenteil (4) mit dem Sitzpolsterteil (3) verbindenden Bewegungsmechanismus sind.

5. Sitz (1) nach einem der vorhergehenden Ansprüche, **dadurch gekennzeichnet, dass**, der zweite Hebel (23) in der Ladeposition (E) des Sitzes (1) gegenüber der Gebrauchsposition (A) des Sitzes (1) um einen vorgegebenen Winkel (24) verschwenkt ist.

6. Sitz (1) nach einem der vorhergehenden Ansprüche, **dadurch gekennzeichnet, dass**, das Lehnenteil (4) in der Ladeposition (E) des Sitzes (1) im wesentlichen in einer Ebene (42) mit dem Sitzpolsterteil (3) angeordnet ist.

7. Sitz (1) nach einem der vorhergehenden Ansprüche, **dadurch gekennzeichnet, dass**, sich das Lehnenteil (4) in der Ladeposition (E) des Sitzes (1) an das Sitzpolsterteil (3) anschließt.

8. Sitz (1) nach einem der vorhergehenden Ansprüche, **dadurch gekennzeichnet, dass**, in der Ladeposition (E) des Sitzes (1) die Rückseite des Lehnenteils (4) und die Rückseite des Sitzpolsterteils (3) mit einer Laderaumebene (43) zusammenfallen.

## Claims

1. Seat (1), in particular a vehicle seat, with a lower seat part (2), with a seat cushion part (3) and with a backrest part (4), the backrest part (4) being connected to the seat cushion part (3) in a manner such that it can rotate about a first axis (41), the seat (1) being settable into a use position (A) and into a loading position (E), and a movement of the seat cushion part (3) between the use position (A) and the loading position (E) of the seat (1) being provided, which movement comprises a rotation of the seat cushion part (3) through approximately 180° about a second axis (31) parallel to the first axis (41), wherein the movement is defined by a first lever (22) which is fastened to the lower seat part (2) in a position further to the front (22a) in relation to a direction of travel (F), which first lever is positioned essentially identically both in the use position (A) and in the loading position (E) and **characterized in that** the movement is additionally defined by a second lever (23) which is fastened to the lower seat part (2) in a position further to the rear (23a) in relation to the direction of travel (F).

2. Seat (1), in particular a vehicle seat, according to Claim 1, **characterized in that** in the use position (A) of the seat (1), on the one hand, and in the loading position (E) of the seat (1), on the other hand, the seat cushion part (3) takes up two essentially nonoverlapping spatial regions (3A, 3E).

3. Seat (1) according to one of the preceding claims, **characterized in that** the first axis (41) is provided essentially at the same location in the use position (A) of the seat (1) and in the loading position (E) of the seat (1), the first axis (41) preferably being provided essentially perpendicularly to the direction of travel (F).

4. Seat (1) according to one of the preceding claims, **characterized in that** the levers (22, 23) are part of a movement mechanism connecting the lower seat part (2) and/or the backrest part (4) to the seat cushion part (3).

5. Seat (1) according to one of the preceding claims, **characterized in that**, in the loading position (E) of the seat (1), the second lever (23) is pivoted about a specified angle (24) in relation to the use position (A) of the seat (1).

6. Seat (1) according to one of the preceding claims, **characterized in that**, in the loading position (E) of the seat (1), the backrest part (4) is arranged essentially in a plane (42) with the seat cushion part (3).

7. Seat (1) according to one of the preceding claims, **characterized in that**, in the loading position (E) of the seat (1), the backrest part (4) adjoins the seat cushion part (3).

8. Seat (1) according to one of the preceding claims, **characterized in that**, in the loading position (E) of the seat (1), the rear side of the backrest part (4) and the rear side of the seat cushion part (3) coincide with a loading compartment plane (43).

## Revendications

1. Siège (1), en particulier siège de véhicule, comprenant un composant inférieur de siège (2), avec une partie de rembourrage de siège (3) et avec une partie de dossier (4), la partie de dossier (4) étant connectée à la partie de rembourrage de siège (3) de manière à pouvoir tourner autour d'un premier axe (41), le siège (1) pouvant être ajusté dans une position d'utilisation (A) et une position de charge (E), un mouvement de la partie de rembourrage de siège (3) étant possible entre la position d'utilisation (A) et la position de charge (E) du siège (1), lequel inclut une rotation de la partie de rembourrage de siège (3) d'environ 180° autour d'un deuxième axe (31) parallèle au premier axe (41), le mouvement étant défini par un premier levier (22) fixé sur le composant inférieur de siège (2) plus en avant (22a) par rapport à une direction de conduite (F), qui est positionné sensiblement de la même manière dans la position d'utilisation (A) et dans la position de charge (E), et **caractérisé en ce que** le mouvement est défini en outre par un deuxième levier (23) fixé sur le composant inférieur de siège (2) plus en arrière (23a) par rapport à la direction de conduite (F).

2. Siège (1), notamment siège de véhicule, selon la revendication 1, **caractérisé en ce que** la partie de rembourrage de siège (3) adopte deux positions spatiales (3A, 3E) ne se coupant pas substantiellement dans la position d'utilisation (A) du siège (1) d'une part et dans la position de charge (E) du siège (1) d'autre part.

3. Siège (1) selon l'une quelconque des revendications précédentes, **caractérisé en ce que** le premier axe (41) est prévu sensiblement au même endroit dans la position d'utilisation (A) du siège (1) et dans la position de charge (E) du siège (1), le premier axe (41) étant de préférence prévu sensiblement perpendiculairement par rapport à la direction de conduite (F).

4. Siège (1) selon l'une quelconque des revendications précédentes, **caractérisé en ce que** les leviers (22, 23) font partie d'un mécanisme de déplacement reliant le composant inférieur de siège (2) et/ou la partie de dossier (4) à la partie de rembourrage de siège (3).

5. Siège (1) selon l'une quelconque des revendications précédentes, **caractérisé en ce que** le deuxième levier (23) est pivoté d'un angle prédéterminé (24) dans la position de charge (E) du siège (1) par rapport à la position d'utilisation (A) du siège (1).

6. Siège (1) selon l'une quelconque des revendications précédentes, **caractérisé en ce que** la partie de dossier (4) est disposée dans la position de charge (E) du siège (1) sensiblement dans un plan (42) avec la partie de rembourrage de siège (3).

7. Siège (1) selon l'une quelconque des revendications précédentes, **caractérisé en ce que** la partie de dossier (4) se raccorde à la partie de rembourrage de siège (3) dans la position de charge (E) du siège (1).

8. Siège (1) selon l'une quelconque des revendications précédentes, **caractérisé en ce que** dans la position de charge (E) du siège (1), le côté arrière de la partie de dossier (4) et le côté arrière de la partie de rembourrage de siège (3) coïncident avec un plan de l'espace de chargement (43).
